Europäisches Patentamt

European Patent Office

Office européen des brevets

(19)

(11) Veröffentlichungsnummer : **0 248 196 B1**

(12) **EUROPÄISCHE PATENTSCHRIFT**

(45) Veröffentlichungstag der Patentschrift :
**18.09.91 Patentblatt 91/38**

(51) Int. Cl.$^5$ : **B29B 7/48**

(21) Anmeldenummer : **87106014.1**

(22) Anmeldetag : **24.04.87**

(54) **Mehrwellige Schneckenmaschine mit Schneidelementen.**

(30) Priorität : **06.05.86 DE 3615209**

(43) Veröffentlichungstag der Anmeldung :
**09.12.87 Patentblatt 87/50**

(45) Bekanntmachung des Hinweises auf die
Patenterteilung :
**18.09.91 Patentblatt 91/38**

(84) Benannte Vertragsstaaten :
**BE CH DE ES FR GB IT LI NL**

(56) Entgegenhaltungen :
**FR-A- 2 093 483**
**GB-A- 981 960**
**US-A- 2 632 203**

(73) Patentinhaber : **BAYER AG**
**W-5090 Leverkusen 1 Bayerwerk (DE)**

(72) Erfinder : **Ullrich, Martin, Dipl.-Ing.**
**Mendelssohnstrasse 32**
**W-5090 Leverkusen 1 (DE)**
Erfinder : **Rathjen, Claus, Dipl.-Ing.**
**Walter-Flex-Strasse 30**
**W-5090 Leverkusen 1 (DE)**

## Beschreibung

Die Erfindung betrifft mehrwellige, insbesondere zweiwellige Schneckenmaschinen mit kämmenden, d.h. ineinandergreifenden Schneckenwellen, welche gleichsinnig oder auch gegensinnig rotieren. Solche Schneckenmaschinen sind bekannt und in der Verfahrenstechnik weit verbreitet. Sie werden für verschiedene Prozesse eingesetzt und sind ausführlich beschrieben von H.Herrmann in "Schneckenmaschinen in der Verfahrenstechnik" (Springer-Verlag, 1972).

Ein besonderes Merkmal solcher hochwertigen Doppelschnecken ist ihr modulartiger Aufbau im Gehäuse und Schneckenwellen, der eine Veränderung der Schneckengeometrie zur Verfahrensoptimierung oder zur Anpassung an veränderte Produkte bzw. auch für den erleichterten Austausch verschleißbeanspruchter Einzelteile ermöglicht. Zur Variation der Geometrie bestehen die Schneckenwellen aus Kernwellen und darauf durch axiales Verschieben montierbare Besatzelemente. Kernwellen und Besatzelemente sind mit Hilfsmitteln zur Drehmomentübertragung und zur axialen Fixierung der Elemente ausgerüstet.

Die Besatzelemente zur Durchführung verfahrenstechnischer Prozesse, die häufig auch in mehreren unterschiedlichen Teilschritten auf einer Schneckenmaschine ablaufen, bestehen aus einem Sortiment aus Schneckengewindeelementen für den Stofftransport, Druckaufbau oder auch Stoffanstau durch Bremswirkung und aus Knetelementen, bestehend aus prismatischen Knetscheiben unterschiedlicher Breite und Versatzwinkel, zur stärkeren Energieeinleitung, Mischung, Scherung und Knetung. Eine Variante solcher Knetelemente ist aus DE-OS 3 047 314 bekannt. Bei ihr sind die Knetscheiben zwecks schonender Knetung mit einem schulterförmigen Absatz ausgerüstet, so daß sich größere Axialabstände benachbarter Knetscheiben ergeben.

Aufgabe der vorliegenden Erfindung ist es, für die oben beschriebenen variablen, modulartig aufgebauten Schneckenmaschinen neue Elemente bereitzustellen, welche den zu behandelnden Stoff schneidend beanspruchen und in das Sortiment bekannter Besatzelemente passen.

Aus der EP 49 835 ist für einen speziellen Prozeß, nämlich das Kristallisieren von Schmelzen chemischer Produkte in intensiv kühlbaren Schneckenmaschinen eine vielfach schneidende Zerkleinerung teilerstarrter Produktteilchen durch eine mittels Nuten unterbrochene Schneckengeometrie bekannt. Derartige Kühlschnecken sind jedoch nicht modulartig variabel aufgebaut wie die oben beschriebene Schneckenklasse, sondern haben wegen der Notwendigkeit großer Kühlflächen hohle Wellen mit einer großen inneren Kühlbohrung und außen aufgeschnittenes Schneckengewinde.

Auf diese nicht variablen Schneckenwellen werden nach der EP 49 435 Nuten eingebracht, die eine schneidende Zerkleinerung für unerwünschte, teilerstarrte Produktformen beim Kristallisieren (Negativform des Schneckenkanals) bewirken.

Eine schneidende Stoffbeanspruchung ist jedoch nicht nur für den speziellen Prozeß des Erstarrens von Schmelzen in Schneckenmaschinen nach der EP 49 835 von Vorteil. Vielmehr kann sie auch für vielfältige andere Prozesse und Verfahrensschritte bedeutsam werden, z.B. für stoffschonende Mischprozesse durch vielfaches Zerschneiden und Umlagern von Stromfäden und von viskosen, flüssigen, festen oder gasförmigen Mischungskomponenten oder für Prozesse, bei denen das Gut insgesamt oder anteilig zerfasert oder zerkleinert werden soll. Solche vielfältigen Prozesse, die in der Regel aus einer Abfolge von mehreren unterschiedlichen Verfahrensteilschritten bestehen, sind vorteilhaft mit Hilfe variabler, modulartig aufgebauter Schneckenmaschinen durchzuführen. Die speziellen Kristallisierschnecken zur Erstarrung von Schmelzen nach der EP 49 835 sind hierfür nicht geeignet.

Ein weiterer Nachteil der im Beispiel der EP 49 835 beschriebenen Schneckengeometrie ist eine rhythmisch schlagende Wellenbeanspruchung, die zu Verschleißerscheinungen im Produktraum und zu besonderer Belastung der Wellen und des Antriebs führen kann. Sie entsteht durch die kreuzförmige Form der axial hintereinander stehenden, verbliebenen Schneckenstegstücke nach Einbringen der Nuten.

Die vorliegende Erfindung soll derartige Nachteile vermeiden und darüber hinaus zusätzliche Anforderungen erfüllen:

1. Eine schneidende Stoffbeanspruchung für verschiedene Prozesse und Teilschritte im Rahmen von Schneckenverfahren.

2. Eine Konzeption von Schneidelementen, welche variable, modulartig aufgebaute Schneckenmaschinen ermöglichen, zum Sortiment bekannter Besatzelemente passen und dieses erweitern.

3. Eine möglichst gleichmäßige Wellenbeanspruchung ohne ausgeprägte rhythmische Belastung durch die Schneidelemente.

4. Möglichst wenig Schneidelementtypen für den Besatz einer Schneckenmaschine.

Diese Aufgabe und die vorgenannten Anforderungen werden erfindungsgemäß dadurch erfüllt, daß im Schneckenbesatz an einer oder mehreren Stellen und auf den kämmenden Schneckenwellen jeweils zugeordnet im Eingriff Schneidelemente angeordnet sind, die aus Gewindeelementen des jeweiligen Schneckenmaschinentyps dadurch erhalten werden, daß Nuten in das Gewindeprofil mit entgegengesetzter oder gleicher Drallrichtung wie das Gewinde eingebracht sind und daß bei einer vorgewählten Länge

$L_E$ des Schneidelements von

$$L_E = \frac{n}{z} \cdot T_G \,,$$

für die Nutsteigung $T_N$ die Beziehung:

$$T_N = 2 \cdot \frac{n}{k} \cdot T_G \text{ gilt,}$$

wobei $T_G$ die Steigung und z die Gangzahl des Schneckengewindes ist, und n ganze Zahlen und k ungerade, ganze Zahlen sind.

Bevorzugte Ausführungsformen der Erfindung gehen aus den Unteransprüchen hervor.

Im folgenden wird die Erfindung anhand von Zeichnungen und Ausführungsbeispielen beschrieben. Es zeigen

Fig. 1 eine Seitenansicht eines dreigängigen Schneidelementes einer zweiwelligen Schneckenmaschine mit gleichsinnig rotierenden, kämmenden Schneckenwellen,

Fig. 2 die in das Schneckenprofil eingebrachte Nut (Achsschnitt),

Fig. 3 die Stirnfläche A des Schneidelements nach Fig. 1,

Fig. 4 die Stirnfläche B des Schneidelements nach Fig. 1,

Fig. 5 die Seitenansicht eines zweigängigen Schneidelementes einer zweiwelligen Schneckenmaschine mit gleichsinnig rotierenden, kämmenden Schneckenwellen,

Fig. 6 die Form der in die Schneckenwellen eingebrachten Nuten (Achsschnitt nach Fig. 5),

Fig. 7 die Stirnansicht A dem Schneidelementes nach Fig. 5,

Fig. 8 die Stirnansicht B des Schneidelementes nach Fig. 5 und

Fig. 9 verschiedene Montagemöglichkeiten für die Schneidelemente auf den kämmenden Schneckenwellen.

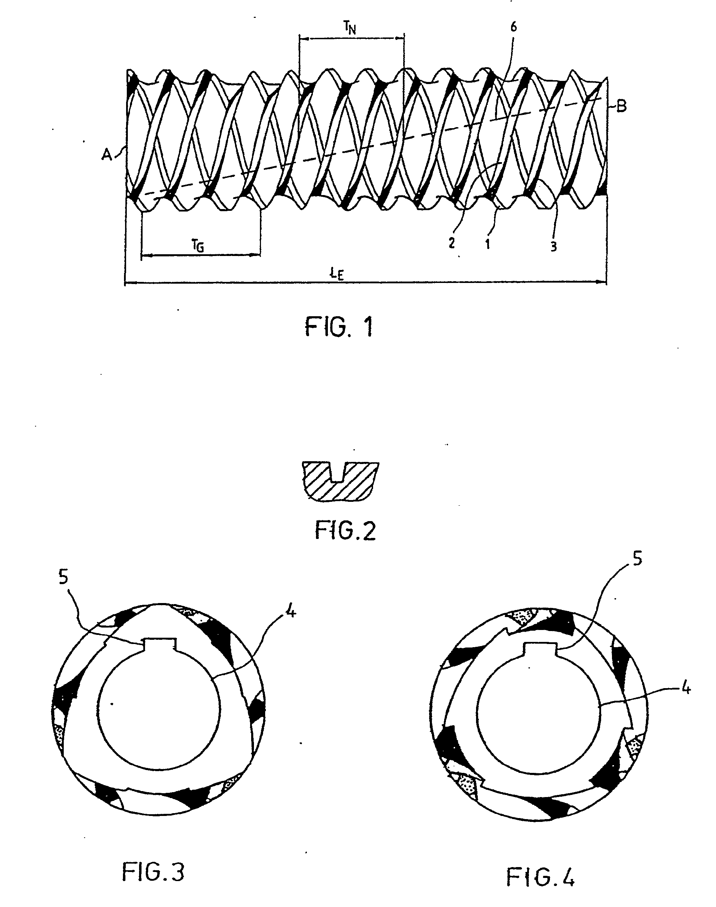

Das dreigängige Schneidelement nach Fig. 1 besitzt eine Elementlänge $L_E$ von 180 mm, eine rechtsgängige Gewindesteigung $T_G$ von 45 mm und eine linksgängige Nutsteigung $T_N$ von 40 mm. Mit der Gangzahl Z = 3 ergeben sich damit aus den Beziehungen:

$$L_E = \frac{n}{z} \cdot T_G \text{ und } T_N = 2 \cdot \frac{n}{k} \cdot T_G$$

die ganzzahligen Werte n = 12 und k = 27.

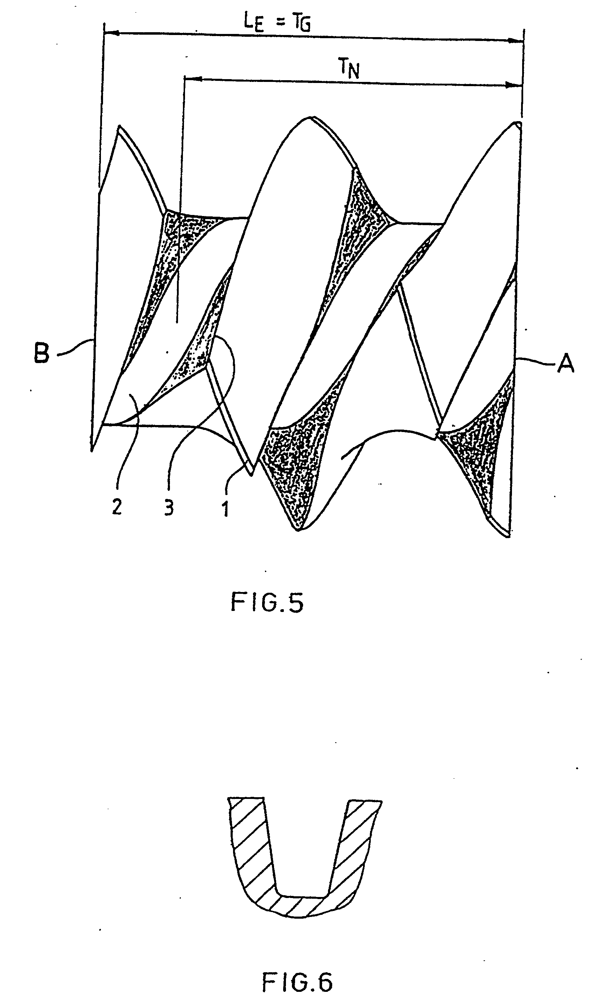

Das zweigängige Schneidelement nach Fig. 5 besitzt eine Elementlänge $L_E$ von 100 mm, eine rechtsgängige Gewindesteigung $T_G$ von 100 mm und eine linksgängige Nutsteigung $T_N$ von 80 mm. Mit der Gangzahl Z = 2 sind damit nach den obigen Beziehungen die ganzzahligen Werte n = 2 und k = 5.

In den Seitenansichten, also in den Figuren 1 und 5 wird deutlich, daß die Schneckengewindestege 1 von den Nuten 2 vielfach unterbrochen werden, wobei zahlreiche Kanten 3 entstehen, die im Zusammenwirken mit dem korrespondierenden Element auf der benachbarten Schneckenwelle den zu bearbeitenden Stoff schneidend beanspruchen.

Weiterhin zeigt die Seitenansicht in Fig. 1, daß die Schnittbereiche zwischen Schneckenstegen 1 und Nuten 2 mit den gebildeten Kanten 3 sich längs des Elementes in Umfangsrichtung entlang der gestrichelten Linie 6 versetzen, so daß eine gleichmäßige Wellenbeanspruchung resultiert.

In den Stirnansichten der Schneideelemente ist die Bohrung 4 für die Montage auf der Kernwelle und als Beispiel für eine torsionsfeste Verbindungsmöglichkeit die Paßfedernut 5 dargestellt.

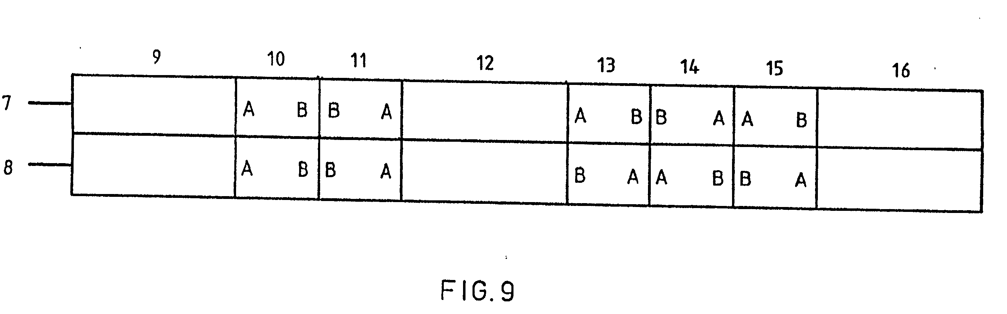

Fig. 9 zeigt schematisch und als Beispiel die Montagemöglichkeiten der beschriebenen Schneidelemente auf den kämmenden Schneckenwellen 7,8. Dabei sind die Bereiche 9, 12 und 16 für die bekannten Gewinde- und Knetelemente oder Kombinationen von diesen vorgesehen. In den Bereichen 10, 11 und 13 bis 15 sollen die neuen Schneidelemente installiert werden. Das geschieht auf der linken Welle 7 in Position 10 in der Lage A B und in der folgenden Position 11 in der Lage B A, und zwar mit demselben Elementtyp, der in Position 11 gegenüber 10 lediglich um 180° geschwenkt montiert wird. Wird die rechte Welle 8 in Position 10 und 11 gemäß Fig. 9 in gleicher Weise wie Welle 7 bestückt, so ergeben sich im Zusammenspiel milde Schneidvorgänge mit größeren Spalten zwischen den zusammenwirkenden Schneidelementen beider Wellen.

Schärfere Schneidwirkungen werden bei der Besetzung der Wellen gemäß Fig. 9 in den Positionen 13, 14, 15 erzielt. Hier ergeben sich dadurch engere Spalten zwischen den Schneidelementen beider Wellen, daß die linke Welle 7 in derselben Abfolge der Schneidelemente wie in Position 10, 11, also A B, B A, A B montiert wird, jedoch die rechte Welle 8 in den korrespondierenden Positionen jeweils umgekehrt bestückt wird, nämlich B A, A B, B A.

Bei Schneckenmaschinen mit gleichsinnig rotierenden Schneckenwellen werden all diese Positionen und unterschiedlichen Schneidwirkungen mit einem einzigen Elementtyp ermöglicht, welcher nach der erfindungsgemäßen Vorschrift gestaltet ist. Dieser eine Elementtyp paßt sowohl zur Veränderung der Länge eines Schneidbereichs im Wechsel aneinandergereiht auf eine Welle, wie es z.B. in Fig. 9 in den Positionen 13 bis 15 gezeigt ist als auch in zwei Varianten mit unterschiedlicher Schneidintensität auf die Nachbarwelle. Der Vorteil einer geringen Anzahl von Elementtypen liegt in der Vereinfachung und Verbilligung der Fertigung und der Ersatzteilhaltung.

Bei Schneckenmaschinen mit gegensinnig rotierenden Schneckenwellen ist wegen des Gegendralles des Hauptgewindes für jede Schneckenwelle eine eigene Schneidelementart notwendig.

Die Nuten 2 haben rechteckige, U-förmige oder trapezförmige Querschnitte (jeweils im Achsschnitt des Elementes gesehen). Die Gangtiefe der Nuten 2 ist vorzugsweise gleich der Gangtiefe des Schneckengewindes.

Da die Nuten 2 den Schneckengewindesteg 1 unterbrechen, reduziert sich die Förderwirkung des Elementes, weil der zu behandelnde Stoff durch die Nuten 2 in den davorliegenden Schneckengang zurückströmen kann. Dies geschieht umso stärker, je größer die Nutbreite ist. Die Drallrichtung der Nuten kann gleich wie diejenige des Schneckengewindes oder bevorzugt dieser entgegengesetzt sein, wobei die Förderwirkung des Elementes stärker reduziert wird als im Falle des gleichgerichteten Nutdralls.

Die Nutsteigung $T_N$ ist nach der erfindungsgemäßen Lehre mit dem Parameter k in Stufen wählbar. Wenn sich dabei unpraktikable oder gebrochene Zahlenwerte für die Nutsteigung ergeben, können durch Variation der Einflußgrößen im Normalfall glatte Maße gefunden werden, wie dies auch in den Ausführungsbeispielen gezeigt wird. Durch kleinere Nutsteigungen wird ebenso wie durch eine größere Anzahl von Nuten auf dem Umfang des Schneidelementes die Zahl der gebildeten Kanten und Schneidvorgänge vergrößert. Vorzugsweise wird die Anzahl der Nuten in einem Schneidelement gleich der Gangzahl des Schneckengewindes gewählt, wie dies auch in den Beispielen verwirklicht ist.

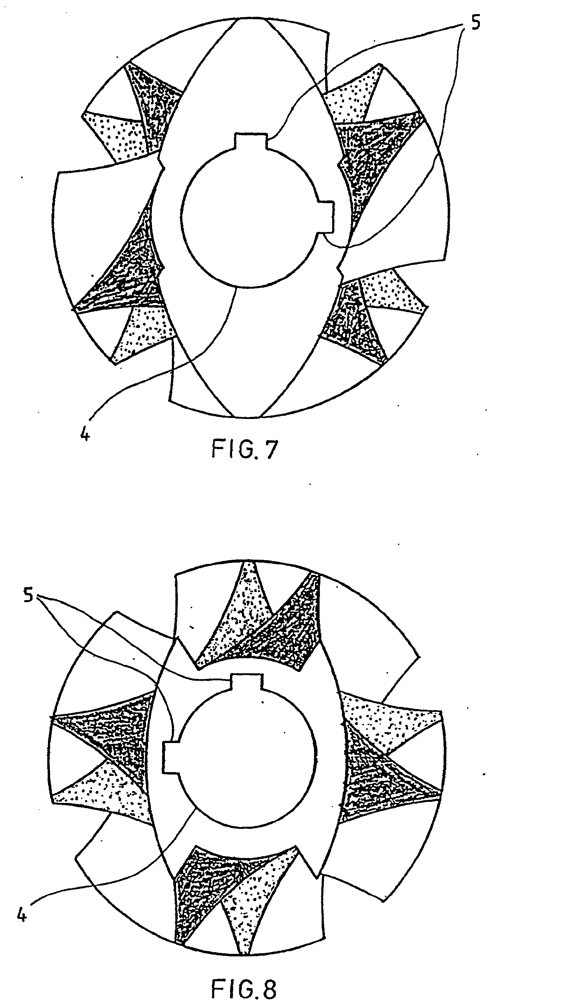

Der Beginn der Nuten an der Stirnseite des Schneidelementes, also der Nutanschnitt ist dem Beginn des Schneckengewindes an dieser Stirnseite, also dem Gewindeanschnitt fest zuzuordnen. Bevorzugt beginnen die Nuten an einer Stirnseite des Schneidelementes an der Stelle der Gewindekämme, wie dies in den Ausführungsbeispielen an den jeweiligen Stirnseiten B in den Figuren 4 und 8 gezeigt wird. An der entgegengesetzten Stirnseite A desselben Schneidelementes enden die Nuten dann erfindungsgemäß am Gewindegrund.

**Patentansprüche**

1. Mehrwellige, bevorzugt zweiwellige Schneckenmaschine mit kämmenden, gleichsinnig oder gegensinnig rotierenden Schneckenwellen und mit variabler, modulartig aufgebauter Schneckenwelle aus Kernwelle und Besatzelementen, dadurch gekennzeichnet, daß im Schneckenbesatz an einer oder mehreren Stellen längs der kämmenden Schneckenwellen jeweils zugeordnet im Eingriff Schneidelemente angeordnet sind, die aus Gewindeelementen (1) der jeweiligen Schneckenmaschinentyps bestehen, in die Nuten (2) mit entgegengesetzter oder gleicher Drallrichtung wie das Gewinde eingebracht sind und daß bei einer vorgewählten Länge $L_E$ der Schneidelements von

$$L_E = \frac{n}{z} \cdot T_G$$

die Nutsteigung $T_N$ die Beziehung

$$T_N = 2 \cdot \frac{n}{k} \cdot T_G \text{ erfüllt,}$$

wobei $T_G$ die Steigung und z die Gangzahl des Schneckengewindes ist, n ganze Zahlen und k ungerade, ganze Zahlen sind.

2. Schneckenmaschine mit Schneidelementen nach Anspruch 1, dadurch gekennzeichnet, daß die Gangzahl des Schneckengewindes 1, 2, 3 oder 4 ist.

3. Schneckenmaschine mit Schneidelementen nach den Ansprüchen 1 und 2, dadurch gekennzeichnet, daß die Anzahl der Nuten (2) in einem Schneidelement gleich der Gangzahl des Schneckengewindes ist und daß der Beginn der Nuten (2) an einer Stirnseite des Schneidelements an der Stelle der Gewindekämme liegt.

**Claims**

1. Multi-shaft, preferably two-shaft screw device with mating screw shafts, which rotate in the same or opposite direction(s), and with a variable screw shaft, which is constructed in a modular manner and consists of a core shaft and attachment elements, characterised in that cutting elements, which are in each case in coordinated engagement, are arranged in the screw attachment at one or more points along the mating screw shafts, which elements consist of thread elements (1) of the respective screw device type, into which grooves (2) are introduced with the opposite or same direction of twist as the thread, and that, given a preselected cutting element length $L_E$ of

$$L_E = \frac{n}{z} \cdot T_G,$$

the groove pitch $T_N$ satisfies the relation

$$T_N = 2 \cdot \frac{n}{k} \cdot T_G,$$

in which $T_G$ is the pitch and z the number of starts, n represents integral numbers and k odd integral numbers.

2. Screw device with cutting elements according to claim 1, characterised in that the number of starts of the screw thread is 1, 2, 3 or 4.

3. Screw device with cutting elements according to claims 1 and 2, characterised in that the number of grooves (2) in one cutting element is equal to the number of starts of the screw thread, and that the grooves (2) start at the point of the thread crests at a front face of the cutting element.

**Revendications**

1. Machine à vis sans fin à plusieurs arbres, de préférence à deux arbres, comprenant des arbres à vis sans fin en engrènement tournant dans le même sens ou en sens inverse et à arbres à vis sans fin variables, de conception modulaire, se composant d'un arbre formant le noyau central et d'éléments d'équipement, caractérisée en ce que des éléments de coupe sont disposés dans l'équipement à vis sans fin en un ou plusieurs emplacements le long des arbres à vis sans fin en engrènement, de manière à être en correspondance les uns avec les autres de façon à entrer en prise, lesdits éléments de coupe consistant en des éléments de filet (1) du type particulier de la machine à vis sans fin dans lesquels sont réalisées des gorges (2) dont le sens de l'orientation de la révolution est opposé ou égal à celui du filet et en ce que, pour une longueur prédéterminée $L_E$ de l'élément de coupe de

$$L_E = \frac{n}{z} \cdot T_G$$

le pas de la gorge $T_N$ satisfait à la relation

$$T_N = 2 \cdot \frac{n}{k} \cdot T_G$$

relations dans lesquelles $T_G$ est le pas et z le nombre de spires du filet de la vis sans fin, n désigne des nombres entiers et k, des nombres entiers impairs.

2. Machine à vis sans fin et à éléments de coupe selon la revendication 1, caractérisée en ce que le nombre des spires du filet de vis sans fin est égal à 1, 2, 3 ou 4.

3. Machine à vis sans fin et à éléments de coupe selon les revendications 1 et 2, caractérisée en ce que le nombre des gorges (2) dans un élément de coupe est égal au nombre des spires du filet de la vis sans fin et en ce que le début des gorges (2) est situé sur un côté extrême de l'élément de coupe à l'emplacement des sommets des filets.

FIG. 1

FIG.2

FIG.3

FIG.4

$$L_E = T_G$$

$$T_N$$

B

A

2 3 1

# FIG.5

# FIG.6

5

4

FIG. 7

5

4

FIG.8

8

EP 0 248 196 B1

| | 9 | 10 | 11 | 12 | 13 | 14 | 15 | 16 |
|---|---|---|---|---|---|---|---|---|
| 7 | | A   B | B   A | | A   B | B   A | A   B | |
| 8 | | A   B | B   A | | B   A | A   B | B   A | |

FIG. 9